# EUROPEAN PATENT APPLICATION

(11) **EP 1 347 019 A1**
(43) Date of publication of application: **24.09.2003**
(21) Application number: 01999614.9
(22) Date of filing: 07.12.2001
(51) Int. Cl.: C09D 4/00, C09D 193/00, C09D 199/00, C09D 201/00

(54) **FORMULATIONS AND METHOD FOR COLORING NATURAL AND/OR ARTIFICIAL STONES AND RESULTING COLORED STONES**

(30) Priority: 07.12.2000 ES 200002944; 24.07.2001 ES 200101733
(71) Applicant: Herraiz Martinez, Francisco, 49980 Paterna (Valencia) (ES); Herraiz Martinez, Miguel, 49980 Paterna (Valencia) (ES); Herraiz Martinez, Juan José, 49980 Paterna (Valencia) (ES)
(72) Inventor: Herraiz Martinez, Francisco, 49980 Paterna (Valencia) (ES); Herraiz Martinez, Miguel, 49980 Paterna (Valencia) (ES); Herraiz Martinez, Juan José, 49980 Paterna (Valencia) (ES)
(74) Representative: Ungria Lopez, Javier
(86) International application number: ES0100478
(87) International publication number: WO02046319

(57) **Abstract**

The invention relates to a formulation essentially consisting of a pigment or colorant and a solvent. Said formulation may additionally contain a synthetic resin as a color fixing element and certain optional additives compatible with the other components. The method involves completely dipping the stone to be colored in the formulation that has been prepared beforehand by mixing the components thereof and place in an appropriate container. The stone is taken out after a given time to enable full coloring and it is then allowed to dry. Said formulation and method and the resulting colored stones can be used in the building sector and for decoration purposes, particularly in the pavement industry.

## Description

The present invention fits in the sector of the building industry and for decoration purposes, and particularly in the natural as well as artificial stone pavement industry.

More specifically, the present invention provides a new technology for obtaining colored stones, which implies a big progress in said sector, which is based on certain formulations for coloring stones and on the corresponding coloring method.

### PRIOR ART

It is of great interest in the technical sector of the pavement industry to be able to provide different colors to the stones used as base material thereof, for example, granite, marble, artificial stones, etc., given that consumers demand more and more varied and attractive products.

Nowadays, the methods existing on the market to provide color to natural stones, marbles, etc. consist of surface enameling or pigmenting the same. As a result of this technique, it is only possible to provide the surface of the stone with color, while the inside maintains the original color of the stone itself. This means that the stone thus colored does not allow for splitting and/or polishing processes without the original color thereof showing through.

In turn, in the case of artificial stones, in order to color them, it is necessary to add pigments in some of the manufacturing stages in such a way that they mix homogeneously with the rest of the mass comprising the stone, so that all the stone is colored evenly. In this way, once the stone is made, a product capable of being subjected to splitting and/or polishing processes is obtained.

Therefore, there is the need to put the finishing touches to a technique that allows the complete mass of natural or artificial stone to be entirely colored, whether the stone is formed in pieces or granules, or uncut, in order to be able to respond to the current demand of the pavement market.

Hence, the applicant has directed his research efforts along these lines, which have allowed the present invention to be successfully concluded. The invention is described in detail in the following sections of the present specification.

### DETAILED DESCRIPTION OF THE INVENTION

The present invention, as indicated in the title, refers to certain formulations and to a method for coloring natural and/or artificial stones, and the resulting colored stones. The technique on which the following touches have been put by the present invention allows entire coloring of the already preformed material mass or as of its original form (in the case of natural stone).

The cited formulations are characterized in that they are essentially comprised of a pigment or colorant and a solvent and a synthetic resin can be additionally contained as a color fixing element, and, optionally, certain additives compatible with the rest of the components and whose purpose is to improve the formulations themselves, or the preparation thereof, or the coloring process of the stones therewith, may also be added.

The cited method for coloring said natural and/or artificial stones is essentially characterized in that it comprises the following operations:
a) preparing a formulation like the one defined above;
b) dipping the stone to be colored in the formulation prepared in the previous step;
c) take said stone out of said formulation and dry it fully in order to obtain a stone with all its mass entirely colored permanently and weatherproof and resistant to the action of UV rays.

In the previously defined general formulation of the present invention, it is possible to select certain specific combinations of ingredients, which constitute the preferred embodiments of the present invention. The method for coloring the stones with these formulations is the same for all of them as it will be seen in the rest of the description.

In accordance with the above, the preferred formulations of the invention are characterized in that they are selected from the group formed by the following formulations A to C.

### - Formulation A:

It is a liquid mixture comprised of a synthetic resin, a pigment or colorant and a solvent compatible with both products.

The proportions of the components of this formulation A are given in the following Table 1:

**TABLE 1**

| Component | Amount (% w/w) |
|---|---|
| Solvent | 50-90 |
| Pigment and/or colorant | 0.1-15 |
| Resin | 2-50 |

In principle, it is possible to use a broad variety of resins of a different nature, among which epoxy resins, acrylic resins, polyurethanes, silicones, high molecular weight hydrocarbons, methacrylic resins, etc. can be cited. The only requirement that the resin should meet is that it is compatible with the colorant formulation and inert to the components thereof and that it has a sufficient capacity for fixing color to the stone so that said stone is permanently colored in all of its mass. For the purposes of the present invention, acrylic resins are especially adequate.

In principle, any colorant material that is compatible with the resin and the solvent, in other words, with the other two components of the formulation of the invention can be used as the pigment or colorant.

Besides, the pigment or colorant should have a high coloring capacity, in such a way that it can penetrate in the entire mass of the stone and permanently dye it.

Likewise, the pigment or colorant should be highly weatherproof and highly resistant to the effect of ultraviolet rays. In other words, the pigment or colorant should be sufficiently stable to the action of the weather (mainly, with its normal climatic changes of temperature and humidity) and to the action of UV rays, so that the color thereof remains permanently unchanged with the passing of time, despite the attacks of these two external factors. Anilines, for example, may be cited as pigments or colorants that meet these requirements.

Any solvent or mixture of solvents inert to said pigment, including water, can be used as a solvent. Said solvent should be capable of making the pigment and resin penetrate deeply into the stone mass providing it a permanent coloring or dyeing and resistant to the commonest aggressive external agents such as weather and UV rays, as indicated above.

As an example, ketones (for example, acetone), natural oils or petroleum derivatives, aromatic solvents (for example, xylene) or any other mixture compatible therewith, aside from water, can be cited as solvents.

Formulation A of the present invention, defined above, is capable of being applied to any type of stone, natural as well as synthetic, in order to entirely color or dye its mass. In this way, the colored stone can be polished, cut, etc., without its natural color, non-existent upon treatment with the formulation, showing through in any of these operations. For example, granite, marble, alabaster, artificial stones of a different nature, etc. can be cited. On the other hand, the stone can be subjected to the action of the formulation in any form that it is in, that is to say, previously preformed in the desired form, with its original uncut form, in pieces or granules of different sizes, slabs, etc.

In order to carry out the stone coloring or dyeing process of the present invention, first formulation A is prepared, for which purpose the solvent, pigment and resin in the above-cited proportions are introduced in a conventional mixer (for example, of the type that are used in the paint industry for the preparation thereof), and the mass is mixed until a homogenous formulation is obtained. Obviously, said homogenous formulation will be a solution in the event that, both the pigment and resin, are soluble in the solvent, in the mixture of solvents or in water and it will be a dispersion when at least one of them is insoluble.

Formulation A thus obtained is placed in a suitable pool type container of suitable dimensions in accordance with the size and amount of stones that are going to be dyed. Afterwards the stones are totally dipped into the formulation either already preformed or with their original natural form, in the form of pieces, granules, or slabs, etc. and they are left at room temperature until they are fully dyed. The immersion time of the stones depends of course on their size, thickness and amount, but in general terms it may vary between 1 hour and 7 days.

Once the dyeing time has gone by, the stones are removed from the formulation, they are left to drip-dry in the air at room temperature. Obviously, the drying time will also depend on the size, thickness and amount of stones, as well as the room temperature. A few days are normally required for the stone to be ready. If it were necessary or desirable to increase the drying rate, a drying agent could be added to formulation A in order to help the drying process of the stone. Stoves or any other drying system that does not alter at all the desired color of the stone thus colored may also be used.

### - Formulation B:

It is an oily liquid mixture comprising natural or synthetic oils, that include colorants and/or pigments compatible with said oils, along with a solvent compatible therewith in order to adjust the viscosity. If so desired, the mixture may include a drying agent, that is to say, an additive that enhances the drying of the stone once it has been colored with this formulation.

The proportions of the components of this formula B are given in the following Table 2:

**TABLE 2**

| Component | Amount (% w/w) |
|---|---|
| Colorant and/or pigment | 0.01-20 |
| Oils | 50-99 |
| Solvent | 1-50 |

Said natural or synthetic oils can be selected from the group formed of petroleum derived oils, paraffins, silicone oils, waxes, etc.

In principle, any colorant material compatible with the oils and the solvent, that is to say, with the two other components of the formulation of the invention, can be used as a pigment or colorant.

Besides, the pigment or colorant should have a high coloring capacity, so that it can penetrate in the entire mass of the stone and dye it permanently.

Likewise, the pigment or colorant should be highly weatherproof and resistant to the effect of ultraviolet rays. In other words, the pigment or colorant should be stable enough against the action of the weather (mainly, with its normal climatic changes of temperature and humidity) and to the action of UV rays, so that the color thereof remains permanently unchanged with the passing of time, despite the attacks of these two external factors. Anilines, for example, may be cited as pigments or colorants that meet these requirements.

Any solvent or mixture of solvents that is inert to said pigment and said oils can be used as a solvent. Said solvent should be capable of making the pigment penetrate deeply into the stone mass providing it a permanent coloring or dyeing and resistant to the commonest aggressive external agents such as weather and UV rays, as indicated above.

As an example, ketones, especially acetone, can be cited as preferred solvents.

Formulation B of the present invention, defined above, is capable of being applied to any type of stone, natural as well as synthetic, in order to entirely color or dye its mass. In this way, the colored stone can be polished, cut, etc., without its natural color, non-existent upon treatment with said formulation B, showing through in any of these operations. For example, granite, marble, alabaster, artificial stones of a different nature, etc. can be cited. On the other hand, the stone can be subjected to the action of the formulation B in any form that it is in, that is to say, previously preformed in the desired form, with its original uncut form, in pieces or granules of different sizes, slabs, etc.

In order to carry out the stone coloring or dyeing process, the same process as the one described above is used, that is to say: formulation B is first prepared, for which purpose the solvent, pigment and oils in the above-cited proportions are introduced in a conventional mixer (for example, of the type that are used in the paint industry for the preparation thereof), and the mass is mixed until a homogenous formulation is obtained.

Formulation B thus obtained is placed in a suitable pool type container of suitable dimensions in accordance with the size and amount of stones that are going to be dyed. Afterwards the stones are totally dipped into the formulation either already preformed or with their original natural form, in the form of pieces, granules, or slabs, etc. and they are left at room temperature until they are fully dyed. The immersion time of the stones depends of course on their size, thickness and amount, but in general terms it may vary between 1 hour and 7 days.

Once the dyeing time has gone by, the stones are removed from the formulation, they are left to drip-dry in the air at room temperature. Obviously, the drying time will also depend on the size, thickness and amount of stones, as well as the room temperature. A few days are normally required for the stone to be ready. If it were necessary or desirable to increase the drying rate, a drying agent could be added to formulation B in order to help the drying process of the stone. Stoves or any other drying system that does not alter at all the desired color of the stone thus colored may also be used.

### - Formulation C:

It is an essentially aqueous liquid mixture that includes colorants and/or pigments compatible therewith, along with a relatively small proportion of solvent with respect to the amount of water. Besides, the formulation can include a resin as a color fixing element and certain additives such as antifoam agents, preservatives and the like, all of them compatible with one another and with the rest of the components.

The proportions of the components of this formulation C are given in the following Table 3:

**TABLE 3**

| Component | Amount (% w/w) |
|---|---|
| Water | 20-99 |
| Resin | 0-60 |
| Colorant and/or pigment | 0.01-50 |
| Additives | 0.01-35 |
| Solvent | 0-10 |

An especially preferred formulation C within the general scope given in Table 3 is given in the following Table 4.

**TABLE 4**

| Component | Amount (% w/w) |
|---|---|
| Water | 20-99 |
| Resin | 1-60 |
| Colorant and/or pigment | 0.01-50 |
| Antifoam agent | 0.01-15 |
| Preservative | 0.01-20 |
| Solvent | 0.01-10 |

In principle, it is possible to use a broad variety of resins of a different nature, among which epoxy resins, acrylic resins, polyurethanes, silicones, high molecular weight hydrocarbons, methacrylic resins, etc. can be cited. The only requirement that the resin should meet is to be compatible with the colorant formulation and inert to the components thereof and that to have a sufficient capacity for fixing color to the stone so that said stone is permanently colored in all of its mass. For the purposes of the present invention, acrylic resins are especially adequate.

In principle, any colorant material that is compatible with the resin, if present, the water and the solvent, that is to say, with the rest of the components of formulation C of the invention, can be used as a pigment or colorant.

Besides, the pigment or colorant should have a high coloring capacity, so that it can penetrate in the entire mass of the stone and dye it permanently.

Likewise, the pigment or colorant should be highly weatherproof and resistant to the effect of ultraviolet rays. In other words, the pigment or colorant should be stable enough against the action of the weather (mainly, with its normal climatic changes of temperature and humidity) and to the action of UV rays, so that the color thereof remains permanently unchanged with the passing of time, despite the attacks of these two external factors. Anilines, for example, may be cited as pigments or colorants that meet these requirements.

Formulation C uses substantially water as the solvent, but it can include a certain proportion of other solvents compatible with the rest of the components of the formulation. Natural or synthetic solvents, water-miscible oils, fats or waxes along or with the help of a surface active agent, alcohols, acids, etc., can be cited among these other solvents. Butyl glycol is an especially preferred solvent.

In any case, the solvent of formulation C (whether it is water alone, or water containing the other solvent) should be capable of making the pigment penetrate deeply into the stone mass providing it a permanent coloring or dyeing and resistant to the commonest aggressive external agents such as weather and UV rays, as indicated above.

Formulation C of the present invention, defined above, is capable of being applied to any type of stone, natural as well as synthetic, in order to entirely color or dye its mass. In this way, the colored stone can be polished, cut, etc., without its natural color, non-existent upon treatment with said formulation C showing through in any of these operations. For example, granite, marble, alabaster, artificial stones of a different nature, etc. can be cited. On the other hand, the stone can be subjected to the action of the formulation in any form that it is in, that is to say, previously preformed in the desired form, with its original uncut form, in pieces or granules of different sizes, slabs, etc.

In order to carry out the stone coloring or dyeing process of the present invention, the same process as the one described above is used, that is to say: the formulation is first prepared, for which purpose the water, pigment and the other components in the above-cited proportions are introduced in a conventional mixer (for example, of the type that are used in the paint industry for the preparation thereof), and the mass is mixed until a homogenous formulation is obtained. Formulation C thus obtained is placed in a suitable pool type container of suitable dimensions in accordance with the size and amount of stones that are going to be dyed. Afterwards the stones are totally dipped into the formulation, either already preformed or with their original natural form, in the form of pieces, granules, or slabs, etc. and they are left at room temperature until they are fully dyed. The immersion time of the stones depends of course on their size, thickness and amount, but in general terms it may vary between 1 hour and 7 days.

Once the dyeing time has gone by, the stones are removed from the formulation, they are left to drip-dry in the air at room temperature. Obviously, the drying time will also depend on the size, thickness and amount of stones, as well as the room temperature. A few days are normally required for the stone to be ready. If it were necessary or desirable to increase the drying rate, a drying agent could be added to formulation C in order to help the drying process of the stone. Stoves or any other drying system that does not alter at all the desired color of the stone thus colored may also be used.

In accordance with the above stated, it can be concluded that with the formulations provided by the present invention and using an absolutely simple and affordable technology, the present invention provides a new form for obtaining stones with any desired color non-existent in nature, said color affecting the entire stone mass which permits cutting, polishing, etc. operations thereof, without the undesired natural color showing through.

This represents very important technological progress in the building sector and for decoration purposes, where there is a greater and greater demand for new designs and colors.

### EMBODIMENTS OF THE INVENTION

The present invention is additionally illustrated by means of the following Examples, which should not be considered at all restrictive of its scope which is exclusively delimited by the attached set of claims.

### EXAMPLE 1

The present Example illustrates a specific case of formulation A of the present invention, which was comprised of:
- Commercial acrylic resin: 19% (by weight/weight)
- Xylene: 38% (weight/weight)
- Acetone: 38% (weight/weight)
- Colorant: 5% (weight/weight)

### EXAMPLE 2

The present Example illustrates a specific case of formulation B of the present invention, which was comprised of:
- Acetone: 40% (by weight/weight)
- Petroleum derived oil: 58% (weight/weight)
- Colorant: 2% (weight/weight)

### EXAMPLE 3

The present Example illustrates two specific formulations representative of formulation C of the present invention:
. Formulation C-1:
   - Water: 60% (weight/weight)
   - Acrylic resin: 30% (weight/weight)
   - Colorant: 8% (weight/weight)
   - Preservative: 0.5% (weight/weight)
   - Antifoam agent: 0.5% (weight/weight)
   - Butyl glycol: 1% (weight/weight)
. Formulation C-2:
   - Water: 90% (weight/weight)
   - Colorant: 9% (weight/weight)
   - Preservative: 1% (weight/weight)

### EXAMPLE 4

The present Example illustrates the way of carrying out the coloring of the stone with formulations A-C of Examples 1-3, respectively.

First of all, formulations A to C were prepared by mixing the respective components of each one of them stated in said Examples 1 to 3, in the cited amounts, in a conventional mixer until perfect homogenization.

Each one of the formulations obtained was separately introduced in a pool and a piece of light gray natural stone was dipped therein. The stone was soaked entirely in the corresponding formulation for 48 hours.

Afterwards, it was taken out, drip-dried in the air at room temperature, which required approximately one day.

In all of the cases, stones dyed deeply of the color corresponding to each one of the formulations were obtained. Said stones permitted polishing and cutting operations without losing their new coloring.

## Claims

1. Formulation for coloring natural and/or artificial stones, **characterized in that** it is essentially comprised of a pigment or colorant and a solvent, it also being possible to additionally contain a synthetic resin as a color fixing element, and certain optional additives compatible with the other components.

2. Formulation according to claim 1, **characterized in that** it is selected among any one of the formulations A, B, C and D whose compositions are indicated in the following Tables 1 to 4:
**TABLE 1: FORMULATION A**
| Component | Amount (% w/w) |
|---|---|
| Solvent | 50-90 |
| Pigment and/or colorant | 0.1-15 |
| Resin | 2-50 |
**TABLE 2: Formulation B**
| Component | Amount (% w/w) |
|---|---|
| Colorant and/or pigment | 0.01-20 |
| Oils | 50-99 |
| Solvent | 1-50 |
**TABLE 3: Formulation C**
| Component | Amount (% w/w) |
|---|---|
| Solvent(s) | 1-99 |
| Colorant and/or pigment | 0.01-30 |
**TABLE 4: Formulation D**
| Component | Amount (% w/w) |
|---|---|
| Water | 20-99 |
| Resin | 0-60 |
| Colorant and/or pigment | 0.01-50 |
| Additives | 0.01-35 |
| Solvent | 0-10 |

3. Formulation according to claim 2, **characterized in that** the formulation chosen for the coloring of the stones is formulation A, defined by Table 1.

4. Formulation according to claim 3, **characterized in that** said resin must be compatible with said pigment or colorant and said solvent and, besides, it must have a sufficient capacity for fixing color to the stone so that said stone is permanently colored in all of its mass.

5. Formulation according to claim 4, **characterized in that** said resin is selected from the group comprised of epoxy resins, acrylic resins, polyurethanes, silicones, high molecular weight hydrocarbons and methacrylic resins.

6. Formulation according to claim 5, **characterized in that** said resin is an acrylic resin.

7. Formulation according to claim 3, **characterized in that** said pigment or colorant must be compatible with said resin and said solvent; besides from having a high coloring capacity; and additionally being highly weatherproof and resistant to the action of UV rays.

8. Formulation according to claim 7, **characterized in that** said pigment or colorant is 100% compatible with its solvent.

9. Formulation according to claim 3, **characterized in that** said solvent is a solvent or mixture of solvents inert to said resin and said pigment and, furthermore capable of making said pigment and said resin penetrate in the entire mass of the stone in order to provide it with permanent coloring or dyeing.

10. Formulation according to claim 9, **characterized in that** said solvent can be selected from among ketones, natural oils or petroleum derivatives, aromatic solvents or any mixture compatible therewith, as well as water.

11. Formulation according to claim 10, **characterized in that** said ketone is acetone.

12. Formulation according to claim 11, **characterized in that** said aromatic solvent is xylene.

13. Formulation according to claim 3, **characterized in that** it comprises 19% (w/w) of commercial acrylic resin, 38% (w/w) of xylene, 38% (w/w) of acetone and 5% (w/w) of colorant and/or pigment.

14. Formulation according to claim 2, **characterized in that** the formulation chosen for coloring the stones is formulation B, defined by Table 2.

15. Formulation according to claim 14, **characterized in that** said oil is a natural or synthetic oil selected from the group comprised of petroleum derivative oils, paraffins, silicone oils and waxes.

16. Formulation according to claim 14, **characterized in that** said pigment and/or colorant comprises a colorant material compatible with the oils and the solvent, and **in that** it has a sufficient capacity for fixing color to the stone so that it penetrates entirely in the stone mass and dyes it permanently.

17. Formulation according to claim 16, **characterized in that** said pigment and/or colorant is an aniline, or is of a solvent type.

18. Formulation according to claim 14, **characterized in that** said solvent comprises a solvent or mixture of solvents inert to said pigment and/or colorant and said dyes, and **in that** it is capable of making the formulation penetrate inside the stone mass to be colored.

19. Formulation according to claim 18, **characterized in that** said solvent is acetone.

20. Formulation according to claim 14, **characterized in that** it comprises 40% (w/w) of acetone, 58% (w/w) of a petroleum derivative oil and 2% (w/w) of the colorant and/or pigment.

21. Formulation according to claim 2, **characterized in that** the formulation chosen for the coloring of the stones is formulation C, defined by Table 3.

22. Formulation according to claim 21, **characterized in that** said pigment and/or colorant comprises a colorant material is compatible with the solvents and **in that** it has a sufficiently high coloring capacity so as to penetrate in the entire stone mass and dye it permanently.

23. Formulation according to claim 22, **characterized in that** said pigment and/or colorant is an aniline or any other solvent type colorant.

24. Formulation according to claim 21, **characterized in that** said solvent(s) comprises/comprise a solvent or mixture of solvents inert to said pigment and/or colorant and that is capable of making the formulation penetrate inside the stone mass to be colored.

25. Formulation according to claim 24, **characterized in that** said solvent is xylene or any other aromatic solvent.

26. Formulation according to claim 2, **characterized in that** the formulation chosen for the coloring of the stones is formulation D, defined by Table 4.

27. Formulation according to claim 26, **characterized in that** said pigment and/or colorant comprises a colorant material compatible with the solvents and **in that** it has a sufficiently high coloring capacity so as to penetrate in the entire stone mass and dye it permanently.

28. Formulation according to claim 27, **characterized in that** said pigment and/or colorant is an aniline or is of a solvent type colorant.

29. Formulation according to claim 26, **characterized in that** said resin must be compatible with said pigment and/or colorant and other components of the formulations and, besides, **in that** it must have a sufficient capacity for fixing color to the stone to permanently color it in its entire mass.

30. Formulation according to claim 29, **characterized in that** said resin is selected from the group comprised of epoxy resins, acrylic resins, polyurethanes, silicones, high molecular weight hydrocarbons and methacrylic resins, or other types, natural or synthetic ones.

31. Formulation according to claim 30, **characterized in that** said resin is an acrylic resin.

32. Formulation according to claim 26, **characterized in that** said solvent other than water is selected from among natural or synthetic solvents, water-miscible oils, greases or waxes in themselves or with the help of some surface active product, alcohols and acids.

33. Formulation according to claim 32, **characterized in that** said solvent is butyl glycol.

34. Formulation according to any one of preceding claims 26 to 32, **characterized in that** said formulation has a composition indicated in following Table 5
**TABLE 5**
| Component | Amount (% w/w) |
|---|---|
| Water | 20-99 |
| Resin | 1-60 |
| Colorant and/or pigment | 0.01-50 |
| Antifoam agent | 0.01-15 |
| Preservative | 0.01-20 |
| Solvent | 0.01-10 |
wherein the different components are the ones defined in preceding claims 26 to 33.

35. Formulation according to claim 26, **characterized in that** it is comprised of:
- Water: 60% (weight/weight)
- Acrylic resin: 30% (weight/weight)
- Colorant: 8% (weight/weight)
- Preservative: 0.5% (weight/weight)
- Antifoam agent: 0.5% (weight/weight)
- Butyl glycol: 1% (weight/weight)

36. Formulation according to claim 26, **characterized in that** it is comprised of:
- Water: 90% (weight/weight)
- Colorant: 9% (weight/weight)
- Preservative: 1% (weight/weight)

37. Method for coloring natural and/or artificial stones **characterized in that** it comprises the following operations:
a) preparing a formulation like the one defined above in any of the preceding claims 1 to 36;
b) dipping the stone in said formulation;
c) take said stone out of said formulation and dry it fully in order to obtain a stone with all its mass entirely colored, permanently and weatherproof, and resistant to the action of UV rays.

38. Method according to claim 37, **characterized in that** said stone is selected from among any natural or artificial stone, previously formed, in its nature uncut form or in pieces or granules of any size.

39. Method according to claim 38, **characterized in that** said stone is selected from among granite, marble, alabaster and artificial stones of different nature.

40. Natural or artificial stones colored with the formulation of the preceding claims 1 to 36 by the method of preceding claims 37 to 39.

41. Use of the formulation of the preceding claims 1 to 36 in the manufacture of colored stones, according to claim 40, to be used for pavements.
